# EUROPEAN PATENT APPLICATION

(11) **EP 1 748 609 A1**
(43) Date of publication of application: **31.01.2007**
(21) Application number: 06117897.6
(22) Date of filing: 26.07.2006
(51) Int. Cl.: H04L 12/58

(54) **Integrated message system with gateway functions and method for implementing the same**

(30) Priority: 26.07.2005 US 191250
(71) Applicant: Xcome Technology Co., Ltd., Sanchung City T'ai pei (TW)
(72) Inventor: Tarn, Liang-Chern 7F-2, No. 2,, Taipei County (TW)
(74) Representative: Viering, Jentschura & Partner

(57) **Abstract**

The present invention discloses an integrated message system including gateway functions and a method for implementing the same. In the integrated message system, a user is used as a session initiator. The session initiator builds a session for passing voice and text messages through a network medium. In the session, the session initiator is used as a gateway in order to invite other clients in networks to join in the session. Because the session initiator provides other message functions, it accepts connections from the users of other message systems in order to integrate the clients during the session from different instant message systems, IP-based and/or PSTN systems.

## Description

BACKGROUND OF THE INVENTION
1. Field of the Invention

The present invention relates to an instant message system for use in Internet and mobile communication networks and a method for implementing the same and, more particularly, to an integrated instant message system with gateway functions and a method for implementing the same.

2. Description of the Related Art

Due to fast developing of Internet communication technology, various instant messengers for use in Internet and mobile communication networks are prospering. Through the instant messengers, communication between people is no longer limited by space and time. Using desktop computers, notebook computers, or palmtop computers, users can conduct instant message communication through Internet (including wireless and cable networks) anywhere, anytime. Alternatively, using mobile phones, users can conduct instant message communication through the mobile communication networks (including high and low tier mobile phone networks).

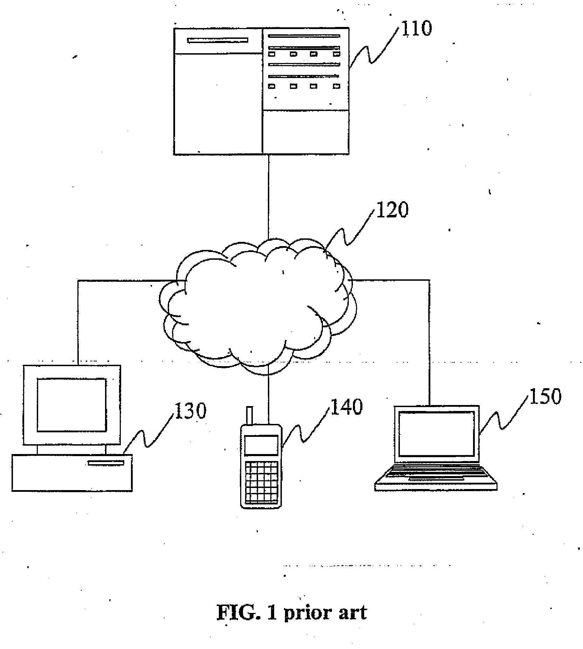

Referring to FIG. 1, a typical instant message system includes clients 130, 140 and 150. The clients are connected with an electronic device (such as the computers and the mobile phones) of a network medium 120 (such as Internet and the mobile communication networks). The electronic device executes an instant message system software program for connection with a server 110 of the instant message system. Any client can invite any other client to conduct instant message communication. In that case, the server 110 initiates a session so that the users can send text and files and can even conduct multi-party on-line voice and video conference calls.

The typical instant message system uses a client-server structure. Several problems are encountered in the use of the typical instant message system. Firstly, service cannot be provided when the server crashes. The clients have to log on through the server, and conduct instant transmission of messages through the server in the session. When the server crashes, no service can be provided, and the clients cannot be served through the server. This problem can be obviated by means of a cluster server or a backup server; however, the cost of service will be increased.

Secondly, users in different instant message systems cannot communicate. The instant message systems compete with one another. The users in the different instant message systems cannot communicate for not being able to tear down barriers between the different instant message systems. Thus, a user is often forced to join in many different instant message systems in order to get in touch with all his or her friends who are not members of the same system or service.

### SUMMARY OF THE INVENTION

The primary object of the present invention is to provide an instant message system not in need of a server and a method for implementing the same so that users can conduct instant message communication when the server crashes.

Another object of the present invention is to provide an integrated instant message system and a method for implementing the same in order to integrate users of different instant message systems in a session.

In order to achieve the foregoing objects, the present invention discloses an integrated instant message system including gateway functions and a method for implementing the same. In the integrated instant message system, a user device is used as a session initiator. The session initiator builds a session for passing instant messages through a network medium. In the session, the session initiator is used as a gateway in order to invite users in other networks to join in the session. Because the session initiator provides other instant message functions, it renders connections with the other instant message systems possible in order to integrate the users of different instant message systems in the session.

In the present invention, a user device is used as a session initiator with gateway functions. Other clients joining in the session can conduct instant message transmission through the session initiator with the gateway functions without the use of a server. The session initiator provides other instant message functions, which integrate the users of different instant message systems in the session. Thus, the problem that a session cannot be built when a server crashes in the typical instant message system and the problem that users of different instant message systems cannot communicate are both solved.

Another aspect of the invention provides cross-communication among clients whether or not they are members of same instant text messaging or voice systems. Any client configured in accordance with the invention herein, whether it belongs to a same or similar instant message service or not, can initiate a chat session in an instant messaging and/or Voice over Internet Protocol (VoIP) service in order to communicate with other clients.

In a preferable embodiment of the invention, a cross-communication module may be provided to reside in client software operating on numerous different devices. A user can rely on client resident software for connection to and among others clients for text messaging and/or voice sessions via a peer-to-peer connection P2P. For example, a user can access and look up contact information for one or more users from a selected phonebook, and then select and dial the contact's phone number for initiating and conducting a VoIP session in accordance with concepts of the invention herein. Moreover, once a voice channel is established, the user can also establish a new voice session for a MSN contact or contacts in any other similar or different system in accordance with the invention. The previous session(s) and any new session can be combined and joined in the same existing VoIP session. Accordingly, a user can establish a voice session and talk with one or more VoIP users and MSN users during the same conference. It shall be further understood that while a user can initially create a instant message session, a voice session can also be created jointly and users can freely maintain and alternate between either voice and/or text sessions with different users.

Another preferable embodiment of the invention includes client resident software for instant messaging and voice-based communications incorporating an SIP-based (Session Initiation Protocol) connection management module. After a connection pool of participants is defined and built with a session module in accordance with the invention described elsewhere herein, a connection management module may be selected to manage and integrate connections within the defined connection pool. The connection management module passes messages between a session module and specific connections within the connection pool. In this embodiment of the invention, these specific connections may be with clients falling within different types of systems: instant message systems (built-in instant message or external instant message system) and/or IP-based message systems. The connection management module may thus integrate additional connections using an IP-based management module which could manage several IP-based message system connections likes VoIP telephone or video telephone. Alternatively, a PSTN connection management module may be included for exchanging communication with clients over the public switched telephone network (PSTN). It shall be understood that the invention may preferably incorporate an IP-based message system using SIP protocol for initializing and conducting a session but this is not required and other protocols may be applied to the invention.

Other goals and advantages of the invention will be further appreciated and understood when considered in conjunction with the following description and accompanying drawings. While the following description may contain specific details describing particular embodiments of the invention, this should not be construed as limitations to the scope of the invention but rather as an exemplification of preferable embodiments. For each aspect of the invention, many variations are possible as suggested herein that are known to those of ordinary skill in the art. A variety of changes and modifications can be made within the scope of the invention without departing from the spirit thereof.

### BRIEF DESCRIPTION OF THE DRAWINGS

FIG. 1 shows the structure of a typical instant message system;

FIG. 2 shows the structure of an instant message system according to the preferred embodiment of the present invention;

FIG. 3 is a block diagram of the structure of the instant message system shown;

FIG. 4 is a flow chart of a portion of a process in which a session initiator builds and terminates a session in the instant message system;

FIG. 5 is a flow chart of a process in which the session initiator invites the session participant; and

FIG. 6 is a flow chart of a process in which the session initiator receives and passes instant messages.

FIG. 7 is a block diagram of another embodiment of the instant message system that incorporates optional Internet Protocol (IP)-based and public switch telephone network (PSTN) connection modules.

### DETAILED DESCRIPTION OF THE INVENTION

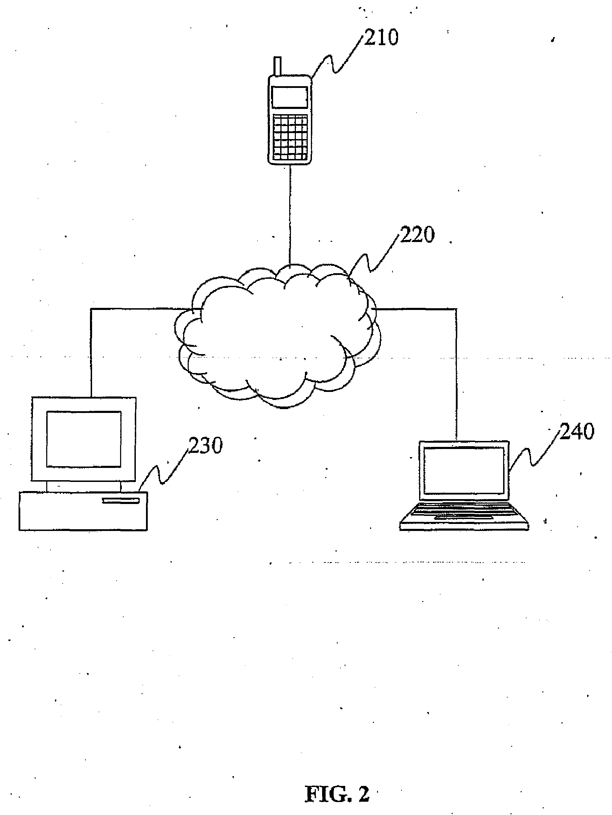

Referring to FIG. 2, according to the preferred embodiment of the present invention, an instant message system includes a session initiator 210 that builds a session for passing instant messages through a network medium 220, and invites session participants 230 and 240. The session participants 230 and 240 are connected with the session initiator 210 in a peer-to-peer manner. In the session, the session initiator 210 is responsible for passing the instant messages. Therefore, the instant message system of the present invention can operate without a server. The session initiator 210 provides other instant message functions so that it renders connection with other instant message systems possible in order to integrate users of different instant message systems in the session. The session initiator 210 is responsible for terminating the session.

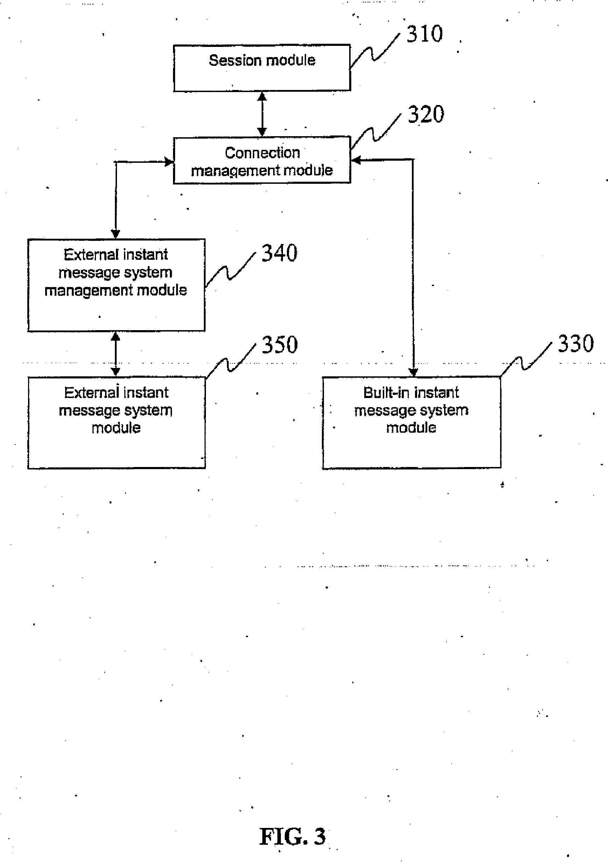

FIG. 3 shows the configuration of the integrated instant message system with gateway functions of the present invention. It is executed in an electronic device (such as computers and mobile phones) of a network medium. It can be used as a session initiator in order to build a session for passing instant messages and can be used as a gateway for passing the instant messages in the session. Thus, built-in instant message system clients are connected with external instant message system clients. The session initiator is responsible for terminating the session. Moreover, the client in which the system is executed can be used as a session participant joining in a session initiated by means of another session initiator. To the session initiator, the session participants are built-in instant message system clients. The system includes a session module 310, a connection management module 320, a built-in instant message system module 330, an external instant message system module 350, and an external instant message system management module 340.

The session module 310 is used to build and terminate a session and shows the content of the session. When a session initiator invites session participants, the session module 310 is actuated. The session module 310 conducts hand shaking with each session participant in order to determine whether the session participant is available for connection and what instant message system communication protocol to use in order to build the connection. After the hand shaking, the session module 310 builds a connection pool in order to maintain all connections in the session, and shows the content of the session, and finally terminates the session.

The connection management module 320 is used to manage the connections in the session. When the connection pool is built, the connection management module 320 is responsible for managing the connections in the connection pool. The connection management module 320 passes messages to the session module 310 from the session initiator in order to show the content or receives messages from the session module 310 in order to pass the messages to a specific connection in the connection pool. The specific connections are classified into two types, i.e., connections built by means of the built-in instant message system clients and connections built by the external instant message system clients.

The built-in instant message system module 330 is used to communicate with the built-in instant message system clients. The built-in instant message system module 330 includes a built-in instant message system communication protocol. When having to pass messages to the built-in instant message system client or receive messages from the built-in instant message system client, the connection management module 320 actuates the built-in instant message system module 330 so that the built-in message system communication protocol can pass and receive the messages.

The external instant message system module 350 is used to communicate with the external instant message system clients. The instant message system of the present invention may include more than one external instant message system modules 350. Each external instant message system module 350 includes an external instant message system communication protocol. When having to pass messages to the external instant message system client or receive messages from the external instant message system client, the connection management module 320 actuates the external instant message system module 350 through the external instant message system management system 340 so that the external message system communication protocol can conduct the transmission and receipt of the messages.

The external instant message system management module 340 is used to manage the external message system modules 350 needed in the session. The session initiator is a gateway that integrates other instant message systems. The external instant message system management module 340 is used to manage the external message system modules 350 needed in the session. When passing messages to the external instant message system client, the connection management module 320 calls the external instant message system management module 340, and the external instant message system management module 340 determines what types the external instant message systems are. On the contrary, when receiving messages from Internet, the external instant message system management module 340 determines what types the external instant messages systems are. After the determination, the external instant message system management module 340 calls appropriate external instant message system modules 350 in order to pass and receive the messages.

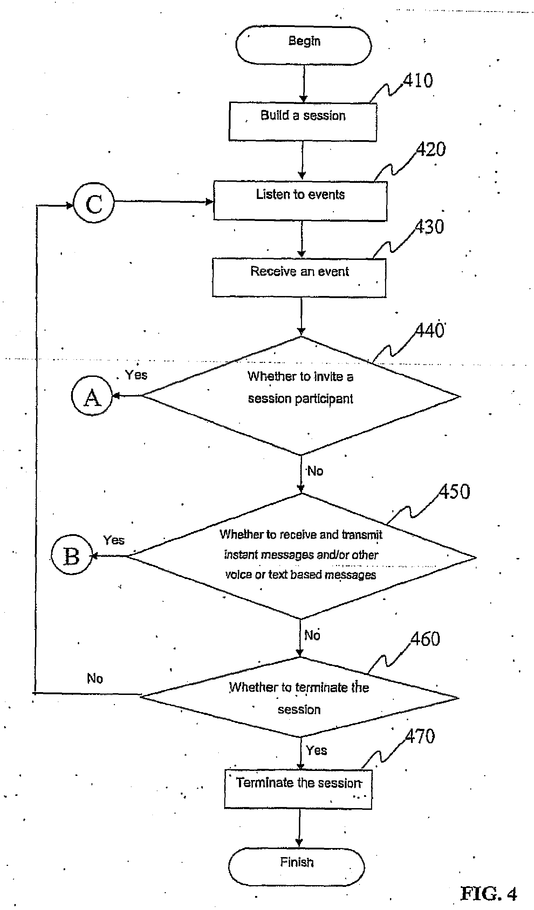

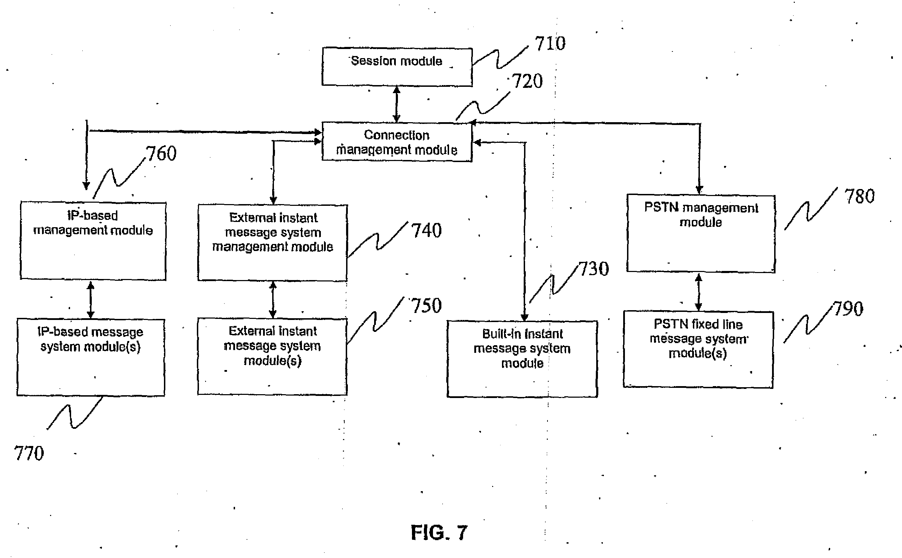

FIG. 4 is a flow chart of a portion of a process in which a session initiator builds and terminates a session in the (instant) message system of the present invention. Referring to FIG. 4, the session initiator is a device in which the integrated (instant) message system with the gateway functions is executed. The session initiator builds a session (Step 410), and listens to all events in the session (Step 420). The events could be user of the session initiator entering a command or the session initiator receiving messages from a session participant. When the session initiator receives an event (Step 430), it will determine whether the event is a user inviting a participant (Step 440). If so, the session initiator will invite the session participant (to be described in detail). If not, the session initiator will determine whether it has messages to pass or receive (Step 450). If so, the session initiator will pass or receive the messages (to be described in detail). If not, the session initiator will determine whether the event is the user about to terminate the session (Step 460). If so, the session initiator will terminate the session (Step 470). If not, the session initiator will retain the session and keep on listening to events. It shall be understood that messages passed or received in accordance with this embodiment of the invention can include instant messages and/or other types of voice or text based messages (see FIG. 7).

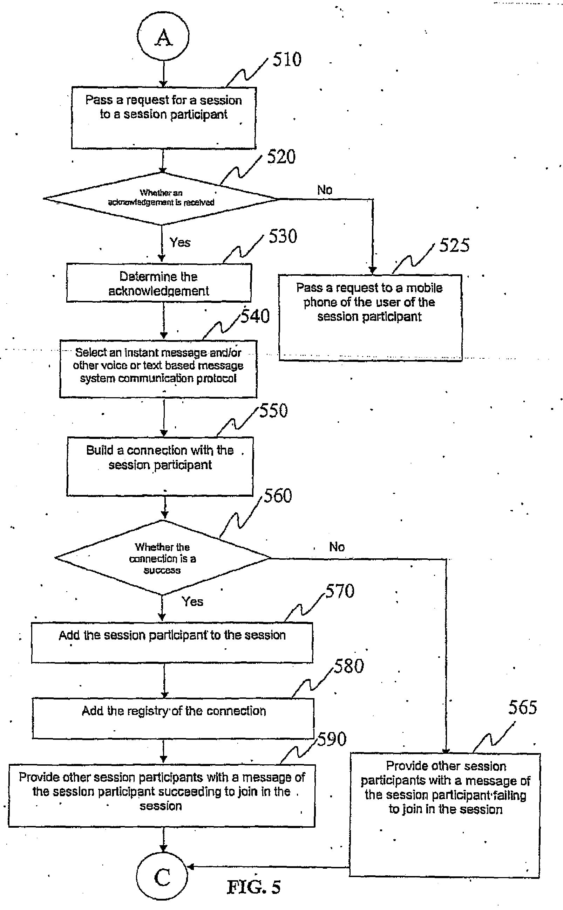

FIG. 5 is a flow chart of a process in which the session initiator invites the session participant. Referring to FIG. 5, the session initiator has built a session for the transmission of the (instant) messages. The session initiator passes a request to the session participant according to email address or telephone number of the session participant (Step 510). After receiving the request, the session participant acknowledges the request and the session initiator receives the acknowledgement (Step 520). If the session participant does not acknowledge, the session initiator will pass another request to a mobile phone of the session participant (Step 525). For example, through a short message system of a mobile communication network, the session initiator can pass a short message to the mobile phone of the session participant in order to invite the session participant to join in the session.

Based on the received acknowledgement, the session initiator determines whether the session participant is a client of the built-in instant message system or a client in the external instant message system or a client of any other voice and/or text based system (Step 530). If the session participant is a client of the built-in instant message system, the session initiator will select the built-in message system communication protocol (Step 540), and attempts to build a connection with the session participant (Step 550). If the session participant is a client of the external instant message system, the session initiator will select the external message system communication protocol (Step 540), and attempts to build a connection with the session participant (Step 550). If the session participant is a client of any other voice and/or text based system, the session initiator will select the corresponding message system communication protocol (Step 540), and attempts to build a connection wit the session participant(s) (Step 550)--see FIG. 7. If a connection is built, the session participant will join in the session (Step 570), and the registry of the connection is added (Step 580). A message of the session participant joining in the session is passed to other session participants (Step 590). If a connection is not built, a message of the session participant failing to join in the session will be passed to other session participants (Step 565). It shall be understood that messages passed or received between session participants in accordance with this embodiment of the invention can include instant messages and/or other types of voice or text based messages.

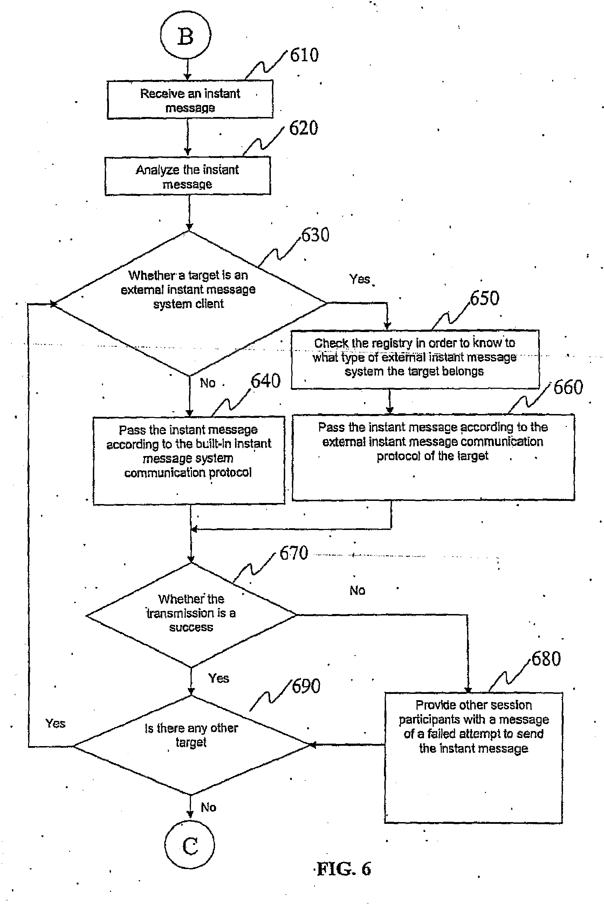

FIG. 6 is a flow chart of a process in which the session initiator receives and passes instant messages. Referring to FIG. 6, the session initiator receives an instant message (Step 610). The instant message could come from a session participant or the session initiator. After analyzing the instant message (Step 620), the system passes the instant message to other session participants ("targets") than the session participant that passes the instant message. The session initiator will take the following steps for every target. The system determines whether the garget is a client of an external instant message system (Step 630). If not, the system will pass the instant message according to the built-in instant message system communication protocol (Step 640). If so, the system will check the registry in order to know what type of external instant message system the target belong to (Step 650), and will pass the instant message according to the external instant message system communication protocol of the target (Step 660), and will determine whether the transmission is successful (Step 670). If not, the system will provide the other session participants with a message of a failed attempt to pass the instant message (Step 680). The system will determine whether there is another target (Step 690). If so, the system will determine whether the target is a client of an external instant message system (Step 630). If there is no other target, the system will finish the receipt or transmission of the instant message.

FIG. 7 illustrates another embodiment of the invention that provides an integrated message system with gateway functions for text and voice communications. The described methods herein and related software code may be executed with a variety of electronic devices such as computers and mobile phones as part of a network medium. This embodiment of the invention allows a user to begin a session on a device as a session initiator for exchanging and passing different types of messages. The session initiator may be responsible for both beginning and terminating a particular session. The messages exchanged during a session may include instant text messages (either from a built-in instant message system and/or external instant message system) and voice type communications including IP-based messages and/or PSTN fixed line messages. A client device that is selected to initiate and conduct a session can basically serve as a gateway for passing messages from and between different clients within various systems within the session. As a result, clients within the same system as the session initiator (e.g., built-in instant message system clients) can be connected with different external instant message system clients or clients from voice based systems. Moreover, the session imitator client in which the system methods are executed and carried out can itself act as a session participant joining in a session initiated by yet another session initiator. Because communications between different text and voice messaging systems are managed appropriately and interchangeably in accordance with this aspect of the invention, each of the session participants within a session may be perceived clients from the same system (built-in message system clients) from the perspective of the session initiator. Accordingly, the invention eliminates the need for all users to be members of the same messaging system while allowing users of different text and/or messaging systems to communicate with one another.

As shown in FIG. 7, the system includes a session module 710, a connection management module 720, a built-in instant message system module 730, an external instant message system module 750, an external instant message system management module 740, an IP-based message system module 770, an IP-based management module 760, a PSTN fixed line message system module 790, and a PSTN management module 780. It shall be understood that any combination of one or more of these described modules may be selected to provide an integrated system in accordance with the concepts of the invention to provide cross-communication between clients within different voice and text message systems.

The session module 710 can be used to both build and terminate a session and it can also allow the display or showing of exchanged content on a session initiator during the session. The session module 710 can be actuated when a session initiator begins a session by inviting session participants. The session module 710 may conduct a series of known or established hand shaking routines with each session participant in order to determine whether the session participant is available for a connection, and what message system communication protocol can be used in order to build a connection. After the hand shaking step is completed, the session module 710 can perform its various functions including: constructing a defined connection pool in which all connections with participants will be maintained; showing the content of the session; and finally terminating the session. For example, the session module 710 can conduct hand shaking routines with any number of message systems including an SIP-based system, which may be a VoIP telephone system or a video phone system. In addition, for certain applications, a trans-coding module may be included for trans-coding one voice codec to another voice codec if a particular voice codec is varied and used in a different message system. A heterogeneous session can be thus initiated and conducted as between participants from any one or more of message systems. e.g., built-in message instant message system, external instant message system, SIP-based message system like VoIP. Users from different voice and text message systems can participate in a conference call or session which includes instant message (IM) users and VoIP users. Accordingly, cross-communication between participants from different text and voice based systems can be provided in accordance with this aspect of the invention.

The connection management module 720 can be used to manage the connections within the session. Once the connection pool is built, the connection management module 720 can be responsible for managing the connections between participants within the defined connection pool. The connection management module 720 can facilitate the exchange of voice and text messages from various systems. For example, the connection management module 720 can manage SIP-based connections, other IP-based message connections in addition to PSTN analog voice connections. Messages from the connection management module 720 can be passed to the session module 710 from the session initiator in order to show the content, and/or at the same time the connection management module 720 can receive messages from the session module 710 in order to pass the messages over the designated connection to a specific participant in the connection pool. In accordance with this embodiment of the invention, the specific connections passed between the connection management module can include various types, namely connections and messages built by and for: built-in instant message system clients; external instant message system clients; IP-based message system clients; and/or PSTN message system clients.

The built-in instant message system module 730 can be used to communicate with selected built-in instant message system clients. The built-in instant message system module 730 includes a built-in instant message system communication protocol. When passing and/or receiving messages to and from a built-in instant message system client, the connection management module 720 actuates at the appropriate time the built-in instant message system module 730 so that the built-in message system communication protocol can be followed to pass and receive the messages within that particular system.

The external instant message system module 750 can be used to communicate with selected external instant message system clients. The message system of the present invention may include more than one external instant message system modules 750. Each external instant message system module 750 can follow a different or same external instant message system communication protocol. When passing or receiving messages to and from the external instant message system client, the connection management module 720 actuates at the appropriate time the external instant message system module 750 through the external instant message system management system 740 so that the external message system communication protocol can conduct the transmission and receipt of the messages within clients in that particular system.

The external instant message system management module 740 is used to manage the external message system modules 750 needed in the session. As described elsewhere herein, the session initiator can operate as a gateway that integrates other instant message and voice systems. The external instant message system management module 740 can be used to manage communications with numerous external message system modules 750 needed in the session.

The IP-based message system module 770 can be used to communicate with selected clients within an IP-based message system. The message systems of the present invention may include more than one IP-based message system modules. Each IP-based message system module 770 can follow a different or same IP-based message system communication protocol. When passing or receiving messages to and from an IP-based message system client, the connection management module 720 actuates at the appropriate time the corresponding IP-based message system module 770 through the IP-based management module 760 so that the correct message system communication protocol can conduct the transmission and receipt of messages with clients within that particular system.

The IP-based message system management module 760 can be used to manage the IP-based message system modules 770 needed in a particular session. At the same time, as described elsewhere herein, the session initiator can operate as a gateway in combination with the session module 710 and connection management module 720 to integrate other instant message and voice systems as described herein.

The PSTN fixed line message system module 790 can be used to communicate with selected clients within a PSTN message system. The message systems of the present invention may include more than one PSTN message system modules. Each PSTN message system module 790 can follow a different or same PSTN message system communication protocol. When passing or receiving messages to and from a PSTN message system client, the connection management module 720 actuates at the appropriate time the corresponding PSTN message system module 790 through the PSTN management module 780 so that the correct message system communication protocol can conduct the transmission and receipt of messages with clients within that particular system. Because the PSTN generally carries analog voice signals, the PSTN management module 780 should preferably contain a signal transcoder for transcoding signals between analog and digital signals. When passing and receiving messages to and from the PSTN message management module 790, the transcoder(s) in the PSTN management module 780 can transcode analog signals to digital signals, and vice versa, digital signals to analog signals.

The PSTN message system management module 780 can be used to manage the PSTN message system modules 790 needed in a particular session. At the same time, as described elsewhere herein, the session initiator can operate as a gateway in combination with the session module 710 and connection management module 720 to integrate other instant message and voice systems as described herein.

When passing messages to clients within a selected message systems herein, the connection management module 720 can call the appropriate management module (external instant message system management module 740, IP-based management module 760 and/or PSTN management module), and then the management module can in turn determine and identify what particular type of message system is required. The message (instant message, IP-based message or PSTN communication) can then be passed onto clients therein in accordance with the appropriate protocol for that particular message system. Meanwhile, when receiving messages from clients within selected (external instant, IP-based or PSTN) message systems or the Internet, the respective management module can analyze the messages and determine the particular type of messages system from where they originated. After that determination is made, each of the message system management modules 740, 760 and/or 780 can select and call the appropriate message system modules 750, 770 and/or 790 respectively in order to pass and receive the corresponding messages onto the connection management module 720 and session module 710 accordingly. The session module 710 and the connection management module 720 provides a cross-communication module within resident client software to connect a user to others over a P2P connection. Any client from a text or voice message system, whether it belongs to an IM service or not, can initiate a chat session within an IM service and/or conference with voice via VoIP.

The present invention has been described via detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An integrated voice/text message system with gateway functions, said system comprising: a session module for building and terminating a session in a network medium and for showing voice/text messages passed in said session; a connection management module in communication with an instant message system management module, an IP-based management module and a PSTN management module for managing connections in said session; an instant message system module in communication with said instant message system management module for managing and communicating with instant message system clients in said session; an IP-based message system module in communication with said IP-based management module for communicating with said IP-based message system clients in said session; and a PSTN message system module in communication with said PSTN management module for communicating with said PSTN message system clients in said session.

2. The system according to claim 1 wherein said network medium comprises Internet, high tier mobile phone system networks, and low tier mobile phone system networks.

3. The system according to claim 1 wherein said messages comprises files, text, voice, images, images and videos.

4. The system according to claim 1 wherein said connections in said session comprises peer-to-peer connections.

5. A method for implementing an integrated message system with gateway functions, said method comprising the steps of: building a session capable of supporting clients from an instant message system, an IP-based message system and a PSTN message system; passing a request to a session participant; receiving an acknowledgement from said session participant; selecting a message system communication protocol selected from one of the following: instant message system, an IP-based message system and a PSTN message system; building a connection with said session participant; receiving and passing messages in accordance with the selected message system communication protocol; and terminating said session.

6. The method according to claim 5 wherein the step of receiving said acknowledgement from said session participant further comprises the step of: passing a request to a mobile phone of a client of said session participant if there is no acknowledgement from said session participant.

7. The method according to claim 5 wherein the step of building said connection with said session participant further comprises the step of: passing a message to other session participants in the session if the attempt to build a connection fails.

8. The method according to claim 5 wherein the step of receiving and passing said messages further comprises the step of passing a message to other session participants in said session if the attempt to send said messages to a session participant fails.

9. The method according to claim 5 wherein the step of building a connection with said session participant comprises building peer-to-peer connections with said session participants.
